# EUROPEAN PATENT SPECIFICATION

(11) **EP 0 364 444 B1**
(45) Date of publication and mention of the grant of the patent: **29.12.1993**
(21) Application number: 88902261.2
(22) Date of filing: 26.02.1988
(51) Int. Cl.: H04M 3/42

(54) **INTERNAL COMMUNICATION SYSTEM**
INTERNES ÜBERTRAGUNGSSYSTEM
SYSTEME DE COMMUNICATION INTERNE

(30) Priority: 26.02.1987 SE 8700817
(43) Date of publication of application: 25.04.1990
(73) Proprietor: YXFELDT, Leif, S-115 24 Stockholm (SE)
(72) Inventor: YXFELDT, Leif, S-115 24 Stockholm (SE)
(74) Representative: Delhage, Einar
(86) International application number: SE8800087
(87) International publication number: WO8806823

(56) References cited:
- SE-B- 429 082

## Description

This invention relates to an internal communication system comprising a number of station units, which everyone in a conventional manner is intended to be placed next to a telephone set and which have a keyboard for combinations of figures or/and letters. Furthermore the station units are connectable to a central unit by a conventional line connection that is freely brancheable, said central unit being intended to be placed next to a telephone switchboard and comprising means for monitoring and administering the traffic to and outgoing traffic from each one of the station units.

Most companies and organisations having more than ten employees have problems with internal communication. The importance of these problems is depending upon the type of operation and the design of the work places. Communication problems exist mainly between management and those employed, between individual employees and between the switchboard operator and the employees. There are a lot of more or less advanced aids to overcome these problems. Examples thereof are all those now occuring intercommunication systems, tube mail systems, internal mail systems, staff locating systems etc. Depending upon to what extent an organisation or a company is dependent on the efficiency of internal communication a large or small investment is made regarding aids. There is however presently no system that will give a complete solution at a reasonable cost. Not even the most modern telephone switchboards can handle message distribution in a rational manner. Too much time consuming handling by the staff is required. So called electronic mail systems are advanced and expensive, but have serious limitations when being used. Intercommunication systems give good function but do not give a complete solution to communication problems.

From the published Swedish patent application 80 01267-7 (publication No. 429 082) a switchboard having an associated computer unit is previously known, which together with connected telephone sets allow, that the switchboard is informed from the individual extension that the person to which said extension belongs, is absent as well as a message on the possible cause and the estimated time of return. This can be accomplished by the way that the person in question puts in a number comprising two figures, possibly followed by time information having four figures. These messages will then appear on the display screen associated with the switchboard. An obvious disadvantage of this system is that the individual person cannot see by himself what code has been put into the telephone. Furthermore there is no possibility in this system to send a message to an extension from the central switchboard except of course verbal messages.

From the brochure "Message and absence marking system Stentofon SVM, ASEA Skandia, A500 list 58, 3 part 3, November 1985" an intercommunication system is previously known comprising a central unit intended to be connected to an existing telephone switchboard and individual intercommunication extension units. From each such unit both fixed and freely selected messages for instance about state of presence can be put in. Also messages with address to another extension can be inscribed. Every button telephone unit comprises for this a microphone, a loudspeaker and a keyboard equipped with figure and function keys. The freely composed messages are sound recorded through the microphone and the sequence is stored centrally in the central unit. On the centrally placed display screen there is information on the status of every connected intercommunication set and there is also information on messages to the individual extensions. The individual intercommunication extensions however do not present any possibility for determinating that a message has arrived, except by the method, by an appropriate series of button depressions, of playing a possible message if there should be any.

In the brochure "10 PERSONAL-INFORMATIONS-AUTOMAT", printed by Interflex Tidssystem AB, Sollentuna, a system for absence control in companies is described. It may comprise a main terminal next to the telephone switchboard and several, at most 15, separate terminals. The individual terminals are equipped with a keyboard for figure and function keys and three display windows. By means of the function and figure keys fixed messages can be put in together with a time indication from the individual terminals. In the display the message fed in is shown together with the date information fed in and possible information on the date and combined with the connection number of the system for which this information is valid. Thus, in this system there is no possibility to send messages between the terminals nor can freely composed messages be entered to the central terminal. The activation of a key is indicated by illuminating a diode inside the key. In this system inscribed messages are also centrally stored.

In the International Application WO 85/00488 apparatus for displaying messages at a station unit during a silent interval between ringing is disclosed. Such a message is sent from a switching office to a station unit and is received by the station unit wherein a microprocessor handles the communication and the display of message which is stored in the memory of the station set. Thus in this system there is no possibility of sending messages which are entered by means of the telephone keyboard to other station units.

The purpose of the present invention is to provide an internal communication system which is intended to be used together with an existing telephone system and which offers a complete solution of all the different problems which may occur in internal communication.

This purpose is accomplished with an internal communication system as defined in the appended claims.

Thus in an internal communication system having a number of station units, each one of the station units is equipped with a printer and a display and a processor for control of the display, printer and communication and a memory unit intended to store messages to and from the station unit.

By this design of the units the system will take care of most communication situations which could occur within a company and this with the least possible time consumption.

An exemplary embodiment of the invention will be described below with reference to the accompanying drawings on which
Fig. 1 shows in a block diagram representing how the individual station units in a place of work can be connected to a central unit, which in its turn is connected to another central unit in a different office,
Fig. 2 shows another example of a communication network with station units and a central unit,
Fig. 3 shows an example of a communication network with several connected personal computers,
Fig. 4 shows a communication network connected to a local network of computers,
Fig. 5 shows an embodiment of a station unit,
Fig. 6 shows a block diagram of the components of a station unit together with a node box and a main transformer,
Fig. 7 shows a block diagram of a line control card,
Fig. 8 shows a schematic representation of the construction of the central unit with a line control card and a line driver,
Fig. 9 shows the design of a block of data which is sent inside the system,
Fig. 10 shows the general design of the programs in a central unit,
Fig. 11 shows the general design of the programs in a terminal,
Fig. 12 shows a picture of the display screen in the central unit and
Fig. 13 shows the design of a polling sequence.

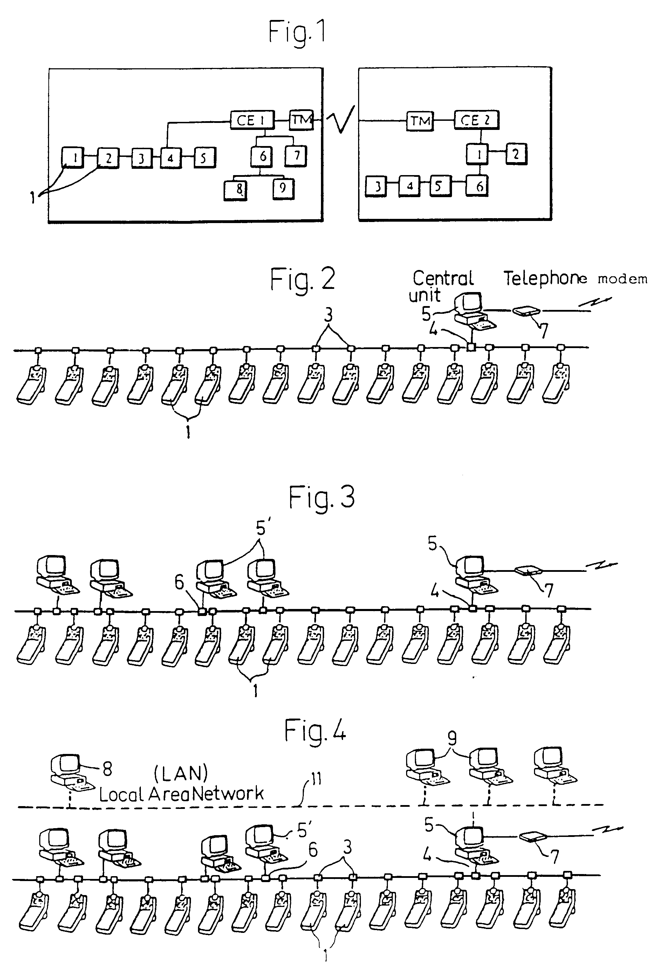

An internal communication system according to the invention consists of a number of station units and at least one central unit. Fig. 1 shows schematically to the left hand such a system having one central unit CE1 and nine station units 1, all connected to the central unit through a two conductor cord. The central unit CE1 is in Fig. 1 shown to be connected to another central unit CE2 to the right hand by means of a telephone modem TM. This second central unit CE2 is in the same manner as CE1 connected to its station units 1, in this case six units. The first central unit CE1 with its nine station units 1 can for instance be installed in the head office of a company, whereas the second central unit CE2 with its six station units 1 can be installed in a branch office of the company.

In Figures 2, 3, and 4 are shown further examples of how the internal communication system according to the invention can be designed. In Fig. 2 is thus shown a number of station units to which node boxes 3 are associated. The node boxes are connected by a common cord to the line driver 4 belonging to the central unit 5. The central unit 5 is equipped with a telephone modem 7, allowing communication with other central units. In Fig. 3 is shown how the communication network that is shown in Fig. 2 can be supplemented with personal computers 5', which are connected to the common communication cord by means of interface units 6, and which fundamentally are equal to the individual station units 1. In Fig. 4 is shown how the system according to the invention can be connected to a local area net (LAN) for personal computers 8. A number of personal computers 9 are also connected to the network and they function as separate work stations, that are equal to the central unit 5. This latter unit however contains the central functions common to the system such as the automatic execution of the communication in the system and the recording of events in the system.

The communication wiring between the central units 5 and 5', and the station units 1 can, as is mentioned above, be provided by means of a two conductor cord connection, for instance of the type described in the Swedish patent application 8704629-8 "Method and equipment for data communication" (Diantek AB). For this each station unit is equipped with a node box 3, which can comprise among other things a short distance modem. In the corresponding manner the central units, which are supposed to be conventional microcomputers, particularly IBM compatible personal computers of types XT or AT, are equipped with a line modem. The line modem can be a separate unit, which is connected to a plug-in card, i.e. a line control card to be placed in the microcomputer.

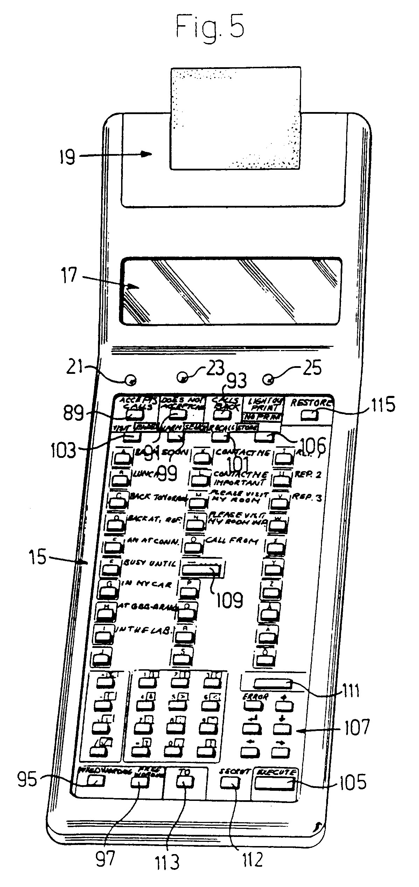

In Fig. 5 is shown a frontal view of a station unit 1. This is equipped with a keyboard 15 having 66 keys, a display 17, e.g. of LCD type, having two rows of twenty positions each, a printer 19, e.g. a thermal printer, having 20 positions. The keyboard 15 is designed to have a large extension in the direction of the eyesight, so that the unit 1 can be placed e.g. on a writing-table next to an ordinary telephone set. On the keyboard 15 there are letter keys centrally arranged in three rows. At the upper side of the keyboard 15 there are keys for indication of presence and at the lower end there are figure and function keys. At the upper end of the keyboard 15 there are also three indication lamps 21, 23 and 25 or other light components arranged having e.g. green red and yellow colour respectively. Furthermore there is in each station unit a simple, e.g. piezoelectrical sound generator, buzzer or loudspeaker, not shown. The functions of the different keys and indication lamps will be described below.

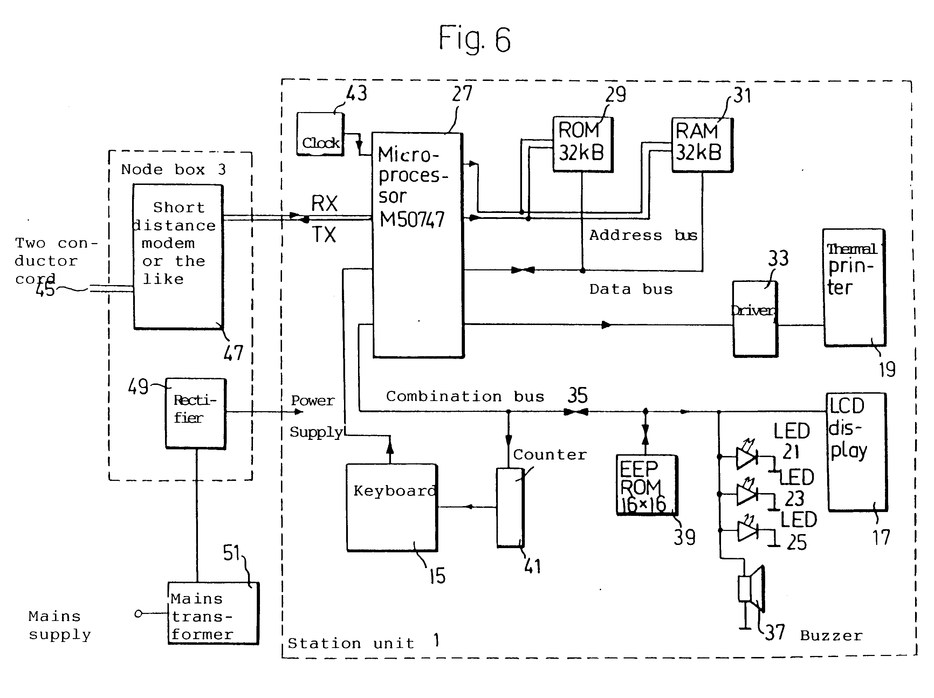

In Fig. 6 is shown schematically the electrical design of the station units 1 and the node boxes 3. Every station unit thus comprises a microprocessor, which in the embodiment shown is of the type Mitsubishi 50747. It is a single chip processor with several input and output ports and with a built-in interface circuit for serial input and output. Furthermore, this processor is among other things equipped with three programmable internal clocks. To the microprocessor are connected a permanent read memory 29 (ROM) having a capacity of 32 kilobytes and a dynamical read and write memory 31 (RAM) having an equal capacity. Furthermore, the thermal printer 19 is, by means of a drive circuit 33, connected to one communication port of the microprocessor 27. To another port further units are connected by means of a communication bus 35. These are the LCD display 17, the light diodes 21, 23 and 25 and a buzzer 37, a permanent read and write memory 39 (EEPROM) having a capacity of 16 x 16 bits. Furthermore, a counter 41 is connected to the combination bus 35, controlling the reading of the switch matrix of the keyboard. The keyboard 15 is read through another communication port of the microprocessor 27. The microprocessor is clocked by an external clock 43 and it has its serial input port RX and serial output port TX connected to the node box 3.

In the station units 1 the ROM memory 29 is used for permanent storage of the programs for operating the station units. The RAM memory 31 is used for storing the messages to the station units, which are not printed by the printer 19, and for storing fixed or permanent texts, associated with the letter keys (see below) and as a work memory for the programs stored in the ROM memory 29. It is also possible, that some parts of the operating programs for the station units are read from the central unit when connecting each station unit, and in such a case the RAM memory 31 thus is used also as a program or code memory. The permanent read and write memory 31 is used for storing of the system address of the station unit and for other important data, such as communication speed, the length of the extension identity numbers, start up date and set alarm signal time (see below), which must not disappear if the voltage supply of the station units would be cut off.

In the node box 3, which is also shown in Fig. 6, the most important component is the short distance modem or other adapting unit for conversion of incoming signals on the two conductor cord 45 to signals, which are suitable for the microprocessor 27. The short distance modem or adapting circuit 47 also of course comprises circuits for converting the signal, which is sent from the microprocessor through the wire DX, to a suitable signal to be transmitted through the two conductor cord 45. One possible embodiment of the unit 47 is described in the above mentioned Swedish patent application. The node box 3 comprises a rectifier 49, rectifying and filtering an alternating voltage. This alternating voltage is obtained from a separate transformer 51, which is connected to the main supply net. The rectifier 49 supplies to the station unit 1 a suitable voltage for operation of its different components, such as the most energy demanding unit, the thermal printer 19.

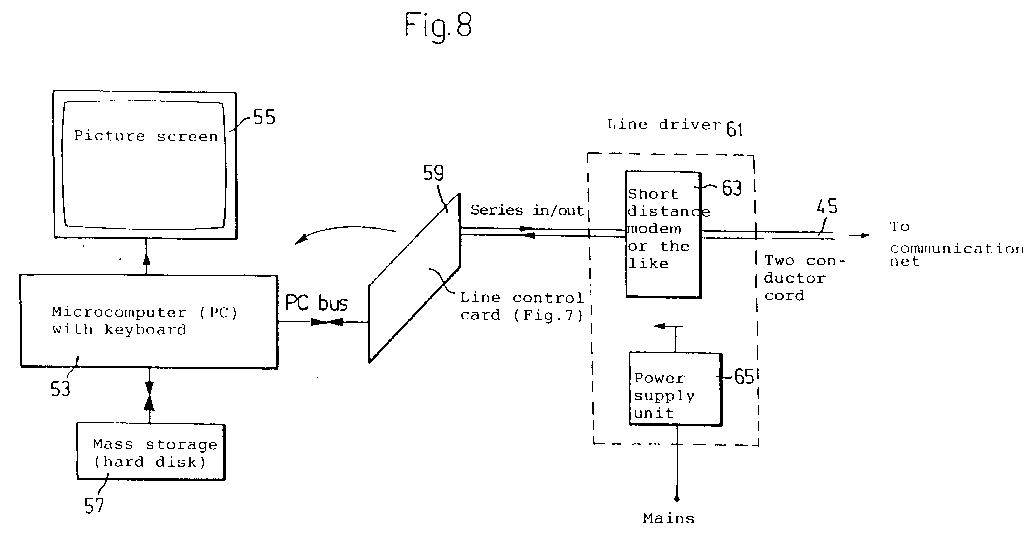

In Fig. 8 is shown generally the construction of a central unit. However it should be noticed that a telephone modem 7 which may be present is not shown in the figure. The central unit 5 thus comprises an ordinary microcomputer, which in the preferred embodiment is a personal computer (PC) of an IBM-compatible type having a computer unit 53, a display screen 55 and a mass storage 57, for instance a Winchester disk having a capacity of 20 megabytes. In the main unit 53 of the micro computer there is located, in an extra slot, a line control card 59. The construction of this will be described in more detail hereinafter. The line control card delivers as output serial output signals of the type V.24 and it is also adapted for receiving such signals. The input and output lines of the line control card 59 are connected to a line driver 61, that is a separate unit placed adjacent to the microcomputer. The line driver 61 contains a short distance modem 63 or a different emitting and receiving circuit for said two conductor card 45, which is connected to one or more node boxes 3. In the line driver 61 there is also a power supply unit 65 connected to electric power mains, providing the line driver 61 with all power necessary for the communication, i.e. the energy needed for operation of the whole communication network.

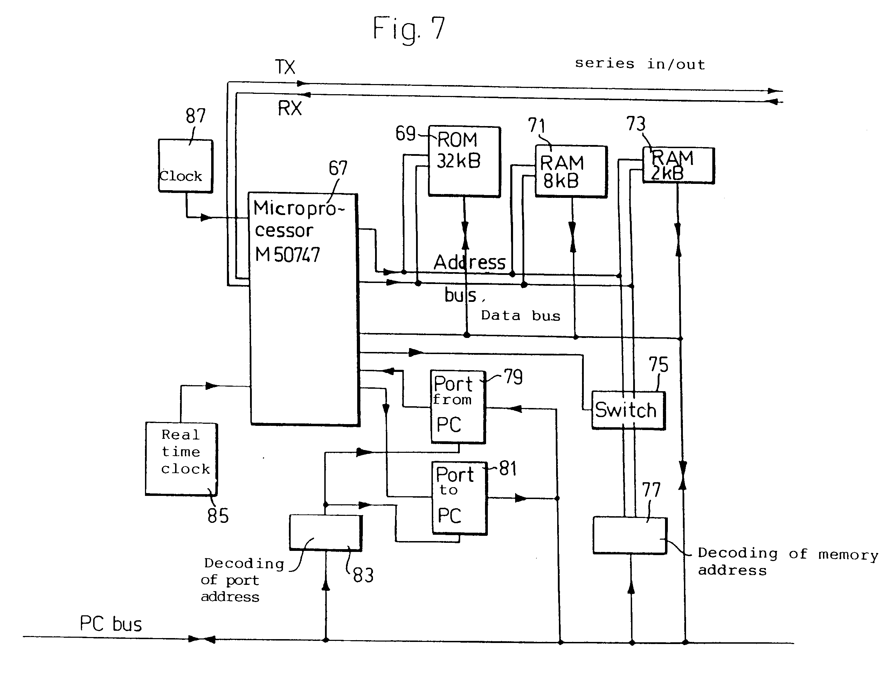

In Fig. 7 is also shown schematically the interior construction of the line control card 59. This contains as a main component a single chip microprocessor, in the preferred embodiment being an identical microprocessor of the type M 50747 from Mitsubishi Electric Corporation, as is also used in the station units 1. This microprocessor 67 is in addition provided with a permanent read memory 69 (ROM) having a capacity of 32 kilobytes or more, a dynamical read and write memory 71 (RAM) having a capacity of 8 kilobytes and a small dynamical read and write memory 73 (RAM) having a capacity of 2 kilobytes. In this small memory, the personal computer too can read and write, that is this memory portion 73 is thus common to both the personal computer and the line control board. In order that the personal computer should have access to this memory portion 73 there is a switch 75 located in the address line from the so called "PC-bus" of the personal computer. This switch 75 is controlled by the microprocessor 75 when it determines that the personal computer shall exchange information with the line control card 59. In the address line from the PC-bus to the read and write memory 73 there is in addition a decoding circuit 77 for storage addressing.

Further there are ports 79 and 81, connected to the microcomputer 67, for respectively output from and input to the personal computer 53. The addressing performed by the personal computer of these ports is controlled by a decoding circuit 83. If the microcomputer 53 is not provided with an own real time clock, such a real time clock 85 could be arranged on the line control board 59. A real time clock delivers to the microprocessor the present time and the present date. In addition there is in the conventional way a clock circuit 87 connected to the microprocessor for providing all its control signals for the inner timing of the operation of the processor. In the same way as for the station units 1 also the serial input and output ports of the microprocessor are used for connection to a driver, in this case the line driver 61, as described above.

The function of the system will now be described. It is supposed that each person in an office is provided with an own station unit close to a telephone set, each station unit in turn being provided with a particular station number or connection or identity number. Each person also has his own password or code word.

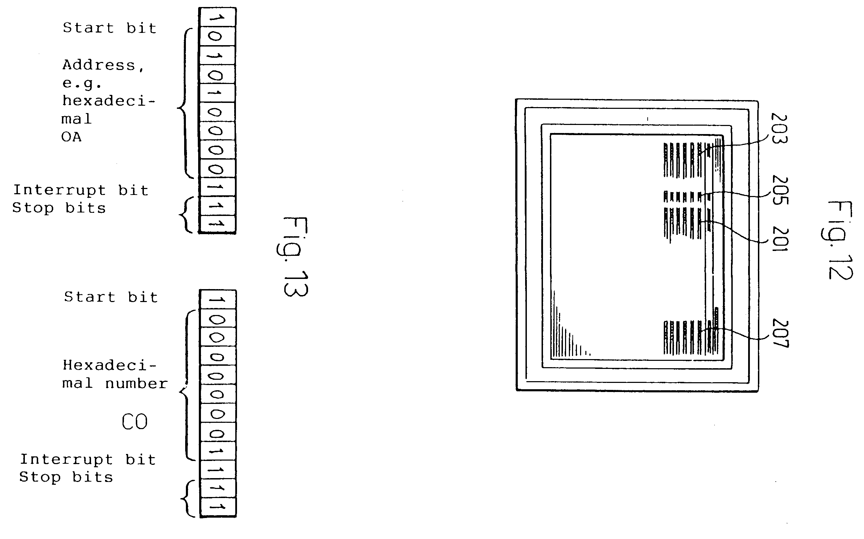

Now supposing a person after being absent returns to his room. Then the signal lamps 21 and 23 having green and red colour are blinking alternately and a soft clicking sound is heard. The person notices the optical and acoustic signals and will then first press one of those two keys 89 and 91, located on the far part of the keyboard having the text "ACCEPTS CALLS" and "DOES NOT ACCEPT CALLS" respectively placed thereabove. The first key 89 means that said person is present and is willing to receive calls. The second key 91 means that the person is present and does not wish to receive any telephone calls. Simultaneously with the depressing of one of these keys 89 and 91 respectively the light elements 21 and 23 will stop blinking and said clicking will stop and the corresponding signal lamp or signal indicator 21 having a green colour and 23 having a red colour respectively, being located above the corresponding key, will be illuminated with a steady light. On the display of the station unit the text "central informed" is shown. A message corresponding to the keys 89 and 91 respectively having the text "Accepts calls" and "Does not accept calls" respectively is then shown also on the display screen of the central unit in that field 201 which is called "Sign" in the list of the names of those persons whose station units are coupled to the system (see Fig. 12). After a predetermined time period, for instance 15 seconds, the message or the sign on the display screen of the central unit is replaced with the text "Present" and "Busy respectively. On the display of the station unit after this time period the present time and the present date are shown. Next the person checks the paper of said printer 19 to find out if any messages have been received.

Suppose then that the switchboard operator receives a call to this person from the outside. The switchboard operator then will have a look at the display screen of the central unit, located adjacent to the telephone switchboard, and will then directly couple said call to the person if it can be told from said display screen that the person is present and accepts calls (sign "Present"), and if said person is not already busy with a telephone call. On the contrary if it can be told from said display screen that the person is present but does not accept calls (sign "Busy" on the display screen), the operator will write on the keyboard of the central unit a message to said person while the calling person is waiting. This message will then immediately be written on the station unit of said person by means of a printer and will then contain information that the calling person wants to speak and may for instance be termed like the following:
CU 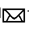 10:07 Th 18/2
M.M. is calling
*******************
wherein the name of the calling person being assumed to be M.M.

In association with this printout and incidentally all printouts of messages being input to the station unit also an optical signal is provided by means of the left yellow signal lamp 25 of the station unit and at the same time the buzzer or speaker provided in said station unit periodically, for instance each 30th second, outputs a soft clicking sound. This signal will continue until the person has depressed a key 106, located below the yellow signal lamp 25 having the text 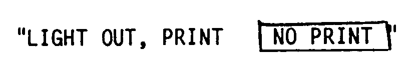
placed thereabove. The yellow lamp 25 is then turned off and the clicking sound will stop. Then the person depresses one of the above mentioned two buttons 89 or 91 or another key 93 located to the right hand side of these, having the text "CALLS BACK" placed there above. These three keys will then mean according to their associated text that the person accepts the call, that the calling person is asked to call back later or that the called person himself will call back later on respectively. The wording corresponding to these key depressions, for instance "Accepts the call", "Does NOT accept the call", and "Will call back later" respectively are then produced immediately on the display 17 of the station unit as well as on the display screen of the central unit and the meaning of this message will be forwarded by the switchboard operator to the calling person. After a predetermined time, say 15 seconds, these messages will be removed from the display screen and the display of the station unit respectively and they will then show the text or the like which has been shown thereon before the depression of the keys.

By means of these simple key selections a person thus can choose his degree of peace and quiet, that is if he wants to be disturbed by telephone calls or not and if such are received if he still will answer the call. In any case the person is immediately informed that somebody is calling for him, this by a minimally disturbing interruption. In case no conversation will be established a great advantage resides in the fact that the message printed out on said printer remains permanently in order that the person later on easily will be able to call back to the calling person.

If the person for some reason does not want to have messages printed out on the printer he will first depress a shift key 111 located below the key of the letter Ö and then the key 106 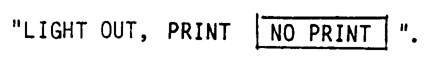
Then the messages received by the station unit henceforth will not be printed out by said printer but are instead stored in the RAM storage of the station unit. A code having the meaning that this key 106 has been depressed after a depression of the shift key 111 will be sent to the central unit. This fact will change the sign of this person on the display screen to "Busy. No print". When the person on a later occasion will depress only the key 106 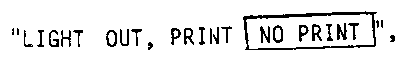
all stored messages will be printed.

When said person intends to leave the room where the station unit is located he may easily present a new sign oil the central unit display screen. Then there are several possibilities.

### 1. A fixed wording and no free text.

These are associated with one of the letter keys A - Ö on the key board 15 of the station unit. In the embodiment illustrated in Fig. 5 the key A has the fixed message "BACK SOON", the key B "LUNCH" and C "BACK TOMORROW". The person now depresses a key 95 having the text "FIXED WORDING" located there above and is located on the lower part of the keyboard. Then on the display is shown "Select fixed wording". Then he depresses the appropriate letter key A - C and finally a key 105 having the text "EXECUTE" at the lower part on the right hand side of the keyboard. Then the green 21 and red 23 lamps will begin to be illuminated alternately and a soft clicking sound will be activated periodically as above, for instance each 30th second, to remind the person when he returns to his room that he should signal to the central unit, by means of the keys 89 and 91, that he has returned. The message will now be sent to the central unit where it is placed in the sign field of the person. It is also permanently shown on the display of the station unit until something else will be printed on this.

### 2. A fixed wording having free fields.

There are also a number of fixedly entered messaged associated with for instance the letter keys D - F, which must be completed by the person with one or more items. These have in the embodiment shown in Fig. 5 the messages D "BACK AT REF.", E "IS AT CONN.", F "BUSY TO". To use one of these signs the person first depresses the key 95 "FIXED WORDING" (the text "Select fixed wording" is shown on the display) and then an appropriate letter key D - F. Then on the display 17 is shown for instance the text 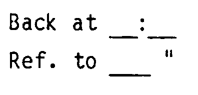
for the message D. On the display there is also a cursor, here being formed by the extra, lower underline sign, which by the person, by means of arrow keys 107 on the keyboard, will be displaced to a suitable location in the free fields, which are marked with underline signs, whereafter the person fills in the appropriate information, in this case first the time for return and then the connection number to the station unit where he intends to reside. The whole message to be sent can be printed on his own printer by pressing the key 106 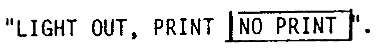
After this the person depresses the key 105 "EXECUTE", whereupon the message shown on the display 17 also will be produced in the sign field 201 on the central unit display screen. In the corresponding way is shown on the display, on depressing the key E (after a former depression of the key 95 "FIXED WORDING"). 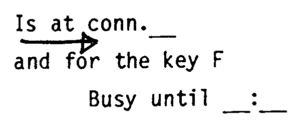
which messages are used in the same way as for the key D except for the fact that here only one information item has to be entered.

### 3. A free wording.

This occurs in the way that the person first depresses a key 97 having the text "FREE WORDING" placed thereabove and is located at the lower part of the keyboard. Then on the display is shown the latest used message having a free wording which is stored in the RAM storage of the station unit. A further depression of same key 97 then will reset the display. Then the person writes suitable words by means of the letter keys A - Ö, a space key 109 located between the letter keys O and P, one of the keys on the numerical keyboard portion, where also some special characters are located, and the shift key 111, together with an arrow key for step upwards and step downwards respectively, this giving a shift between capital and small letters and between figures and special characters respectively or generally a change between those characters shown in Fig. 5 without a frame and those characters shown inside a frame. The text entered can be printed out on the printer of his own by depression of the key 106 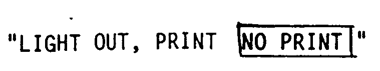
which could be required if the wording comprises more than two lines. If anything in the text has to be changed this can be done by moving the cursor by means of the arrow keys to a suitable location whereafter the correct signs are entered. Finally the person depresses the key 105 "EXECUTE" whereafter as above the lamps 21 and 23 will begin to light up alternately, the soft clicking sound will begin to be activated periodically and the message will be shown on the display screen on the central unit. This sign will be maintained on the display of the station unit until the person returns to his room and depresses one of the keys 89 or 91.

### 4. A fixed wording, entered by the person and having possibly optional fields.

The person may also have a number of freely termed, fixed messages entered in advance by the person, as G "IN THE CAR", H "AT GBG BRANCH", I "IN THE LAB.". To store such a fixed message in the station unit of his own the person first depresses the key 97 "FREE WORDING" twice, then writes the text by means of the letter keys, the numerical keys and the space and shift keys together with the arrow keys for step upwards and downwards respectively. To enter a field which is to be chosen optionally first the shift key 111 and then the space key 109 are depressed a desired number of times. When the message is complete it is stored by depressing the shift key 111 and then the key 101 having the legend 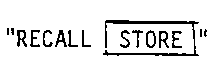
placed thereabove. On the display 17 now the following message is shown 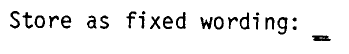
In the free field, marked by the underline sign in this message now is entered, by means of a single key depression, one of the letters A - Ö, this letter thus being a lable of the message entered.

To use a message entered in this way first the key 95 "FIXED WORDING" is depressed, then the shift key 111 and thereafter the associated letter key. The message will then be shown as above in 2. on the display, whereupon the person fills in the items required and finally depresses the key 105 "EXECUTE".

Another case occurs when the person wants to send a message to another person. This can also be done by means of messages having a fixed wording or having a free wording. The message having fixed wording, being shown in Fig. 5, are for the letter K "CONTACT ME", L "CONTACT ME IMPORTANT", M "PLEASE VISIT MY ROOM", N "PLEASE VISIT MY ROOM IMPORTANT", O "CALL FROM". Appropriate fixed messages entered by the person himself can for instance be for T, U and V having the short headings "REPORT 1", "REPORT 2", and "REPORT 3" respectively as is shown in Fig. 5. To send a message to another station unit, first the message is recalled by either depressing a suitable letter key or the shift key 111 followed by a suitable letter key. Then the message will be produced on the display 17. Possible free fields are filled in as above. Then a key 113 is depressed, having the text "TO" placed thereabove and being located at the lower part of the keyboard. Then on the display of the station unit will be shown

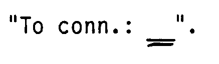

The free field in this message, given by the location having underline signs (the first, lower underlign sign is the curser), is intended for the connection or identity number of the person which shall receive the message. The connection number is in this case assumed to consist of two alphanumerical characters, for instance H5. When the connection number has been filled in are shown on the next line of the display the name of the called person is shown. A list of connection numbers and the names of the associated persons are stored in the central unit and the name information will be sent back to the station unit after the station unit first has sent the connection number to the central unit. After this the person depresses the key 105 "EXECUTE". Then, on the display of the person will be shown "SENDS TO M.M.". On the person's printer the message will then be printed in the following shape (the key L is supposed to have been depressed)
⇒M.M.
10:58 Thursday 18 Feb
Contact me
Important
*********************
On the station unit receiving said message the thermoprinter will type
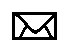 From 00Q8 [00H5]
N.N.
10:58 Thursday 18 Feb
Contact me
Important
*********************
Here the called person is supposed to have the name M.M., the calling or sending person to be N.N., the connection numbers of these to be H5 and Q8 respectively. The opening sign representing an envelope is there as a guarantee for knowing that the message is a genuine sent message and not a message having been typed on the station of his own. This envelope sign cannot be printed on the person's own station by means of a depression of any keys on this. Notice here particularly that the message is not shown on the display of the receiver. However the message is shown when entering on the display of the sending person but is not printed on his printer.

Messages having free wording are sent in the corresponding way. The key 97 "FREE WORDING" is depressed twice and then the desired wording is entered by means of the keys. It can comprise several lines and can, as is described above, be typed on the person's printer by depressing the key 106 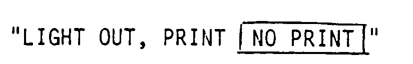
in this step. When the wording is complete the key 113 "TO" is depressed as above, the desired connection number and finally the key 105 "EXECUTE".

For messages having a fixed wording and a free worded portion "free portions" and having solely free wording a printout can thus be obtained on the person's printer. For this the key 106 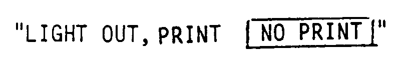
is depressed before depression of one of the functional keys 105 "EXECUTE" and 113 "TO" respectively.

It is also possible, on the construction of the system, to provide a group of persons, for instance a selling unit, with an own calling number or an own calling address. By means of the same procedure as above a message could be sent simultaneously to this whole group of persons, for instance for summoning a meating.

There is also a possibility to search for a certain person. To do this first the connection number of the person is depressed, say H5. Then on the display of the station unit will be shown
Sign for H5
Busy until 13 o'clock
This is shown for a predetermined time period on the display, for instance 15 seconds. If the person then still wants to search (for M.M.), he first depresses the shift key 111 and then a key 99 at the upper part of the keyboard having the text

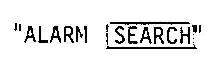

placed thereabove. Then on all of the station units connected to the system the following message will be printed:
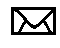 From 00Q8 [0000]
N.N.
11:17 Thursday 18 Feb
Searching
M.M.
*********************
Furthermore, it is also possible to have messages printed on another station unit than one's own, that is those messages, which a person has not been able to look at. For this purpose the key 101 on upper part of the keyboard is depressed having the legend 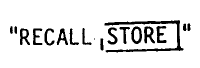
on another station unit, then the person's own connection number and finally the person's own personal code or pass word, which is individual and is determined by the person. Then all the messages, which have not been fetched, are printed on the printer of the other station unit, the last received messages being printed out first, and in this case for instance the following printout is obtained
These messages
have been printed at
connection No. 00Q8
********************
CU 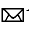 10:04 Th 18/2
M.M. cannot participate
this evening
***********************
End
***********************
On the station unit of the person himself the printer will write the following message
11:58 Thursday 18 Feb
Messages recalled
from connection 00H5
**********************
where H5 is the connection number of the station unit where the person has fetched the messages. The messages sent to a station unit are stored by the central unit on the hard disk in a file associated with this station unit. All the messages received are deleted from said file when one of the keys 89 "ACCEPTS CALLS" or 91 "DOES NOT ACCEPT CALLS" are depressed on the keyboard of the station unit.

In this case when the person having the name N.N. and the connection number Q8 is visiting another person having the name M.M. and connection number H5, the first person could on the station unit of said other person depress the key 103 having the text 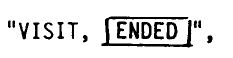
placed thereabove and being located on the upper part of the station unit of said other person and after this depression he presses the key of his own connection number. Then on the display is shown
Visit by: Q8
N.N.

Then the key 105 "EXECUTE" is depressed, and then a message is sent to the central unit. A message or sign having the wording "Visit at connection H5" will now be produced in the sign field 201 of the display screen of the central unit adjacent to the name N.N. and this information is given also to other persons looking for the first person by means of the communication system.

When the visit has ended, the shift key 111 is depressed, the key 103 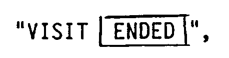
the connection number of the person, for instance Q8, and finally the key 105 "EXECUTE". The new sign of N.N. at the central unit will then be "Visit ended at connection H5" and this will remain until it is expressively changed. A corresponding message will also be shown on the display of the own station unit and the two light elements 21 and 23 will be activated alternately together with the clicking sounds from the built-in loudspeaker or buzzer.

When there is a desire to send messages which are not to be read by unauthorized persons the person proceeds in the following way. The message is entered in the same way as above but instead of the terminating or closing depression of the key 105 "EXECUTE" a key 112 is depressed on the lower part of the keyboard having the text "SECRET" placed thereabove. The message will then be written, in the same way as above, on the person's own printer, but from the printer of the receiver the message is obtained
Secret message
from N.N.
**************
the sender being assumed to have the name N.N. The receiver will then be able to have this message printed out by first depressing the key 101 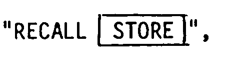
then the key 112 "SECRET" and finally the own personal code.

The printer of each station unit is only used to write messages, as in those cases when the person is absent, is busy, is occupied by a telephone call or has told that he is present but will not accept calls or on a special command in certain cases. On the display of the individual station unit normally the status of the station is shown, i.e. if the person is not present and the associated message on the cause, or if the person is present, the time and date. Further on the display is shown the result of depressing keys on the person's own keyboard.

By means of the telephone modem of the central units one could easily communicate with other similar systems. A call for stations in another system network could eaily be performed by means of the connection number of the station without any particular procedure for this.

There is also a possibility to store such information in the system that should be eaily accessible on every workplace. An example of such information is for a company having international operation the present exchange rates. This information is entered from the keyboard of the central unit. If a person on the station unit keyboard depresses the key 101 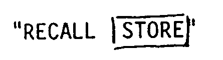
and then the key 105 "EXECUTE", for instance the following will be printed out on the printer.

Information
has headings
MEETINGS
EXCHANGE RATES
**************
For instance for recalling information having the heading "MEATINGS" the person first depresses the key 101 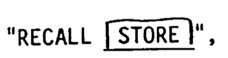
letter keys for the word MEETINGS and finally the key 105 "EXECUTE". Then for instance the following text is written on the printer
Meetings:
20/2 10,00 PR-group
24/2 14,30 Planning group
*************************
There is also a simple alarm or reminder possibility in the system. For this purpose the key 99 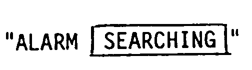
is depressed, and then on the display the following is shown: 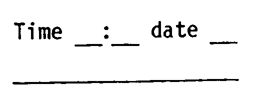
The time and date, when the alarm is to be triggered, is filled in by means of the numerical keys and a suitable arrow key 107 to displace the cursor and the empty field on the second line is filled in with an appropriate message, for instance "Budget meeting". Then the key 105 "EXECUTE" is depressed. The alarm will then be activated at the time set. Then the person's own unit will deliver a loud acoustic signal from its sound producing unit and from the printer is for instance the printout obtained
13:00 Thursday 18 Feb
Alarm message
Budget meeting
********************
On the keyboard there is also a key 115 on the upper right part of the keyboard having the legend "RESTORE" thereabove. It is used after one of the function keys 103, 99, 101, 95, 97, 113 has been depressed, whereby is obtained the return to the normal condition of the station unit.

In each station unit, control card and central unit appropriate programs are stored producing the functions described above. These programs can be permanently stored in read memories (ROM) or on the Winchester disk or on a floppy disk for the central unit. The programs of the station units are in the embodiment described permanently stored but is also possible that some parts of the programmes are loaded to the RAM memory of the station unit, when the system is taken into operation, or when the individual station units are connected to the communication network (so-called downloading). In this way also present, permanently stored program sequences could be replaced with sequences, particularly adapted to the needs of the communication system. Furthermore, for instance the alphabetic and numerical keys of the keyboard may be redefined, for instance for use with letter signs used in different countries.

The communication in the system is made in the way that the terminals are called by central units by means of a program stored in the central unit or in its line control card. Every polling sequence has a length of about 50 bits, which will mean that these have a duration of about 5 milliseconds per terminal for a communication speed of 9600 bauds. 200 terminals per second can thus be polled.

Every information unit sent from the central unit consists fundamentally of one byte, i.e. 8 digital units, see Fig. 13. Before this byte, in the usual way, a start bit is sent and after the information an interrupt bit, being equal to 1 in the first information unit and equal to 0 in the following ones. In Fig. 13 is shown the shape of a polling sequence, wherein bits being shown to the left are being sent first. In the first information unit of the polling sequence is found the address to the station unit being polled. This is a system address different from the earlier mentioned connection number. When an arbitrary station unit receives this information unit an interrupt is generated by the fact that the interrupt bit (the tenth bit) is set. The station unit compares the address received with its own system address. If these are not equal, the station unit will wait until a new information unit will be received having a set interrupt bit. If the system addresses are equal the following information units are received, the interrupt bits of which are not set. In this case the next information unit contains the hexadecimal figures CO, this being the system's code of a polling sequence. The station unit will then check if there is anything to send and in that case it will send one or more messages. Otherwise a message will be sent for acknowledgement of the received polling to the central unit. When the message or messages have been sent, the central unit sends a message to acknowledge the receipt which is indicated in the type field of the header of this message, see below.

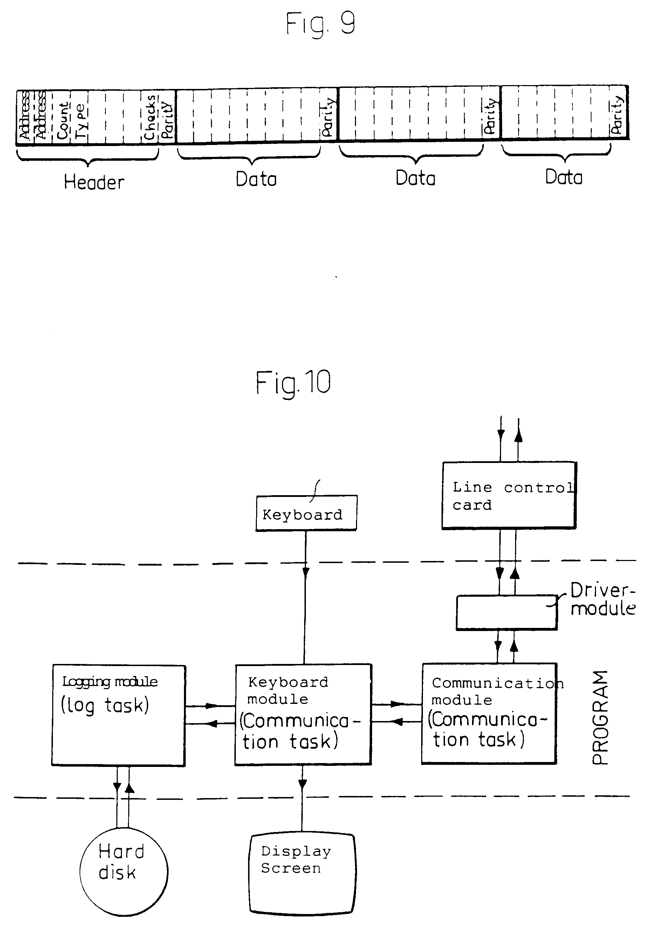

Every communication sequence has the following shape.
1. Polling or data from the central unit
2. Acknowledgement signal (acknowledge) or data from a station unit
3. Terminating sequence from the central unit
The data blocks have the general shape schematically shown in Fig. 9. First in a data block there is a header containing 8 bytes with the address of the block repeated twice, the number of data characters, the message type, three bytes for general use and a check sum. After the header there is a byte for parity check of every bit position of said header, then there is one or more data records having eight data characters each comprising one byte and a last record having at most 8 data characters, every data record being terminated by one byte for parity check.

In the case the microcomputer itself makes the polling of the station units connected the program of the microcomputer can be designed as is schematically shown in Fig. 10. A communication module communicates through a driver module to and controls the line control card. When information is delivered either from the keyboard of the microcomputer or from the communication module this information will be processed by a keyboard module. This in its turn controls the display screen of the microcomputer and also provides information to the communication module. Further there is a logging module, recording on the hard disks important events in the system and preserving among other things all messages which have been sent to the station units and been printed on their printers.

In Fig. 12 is schematically shown how the picture on the display screen of the central unit could be arranged. After an introductory line containing the present time there is a heading line. Below this line there is a list of the names of the persons having a station unit coupled to the system. In said list, after an introductory name field 203, a field 205 is present for the corresponding connection number. Then there is the earlier mentioned field 201 of the sign of the person, where it is indicated in short if the person is present, where the person possibly resides or when the person intends to return. After the sign there is a field 207 having time information when the present sign was entered.

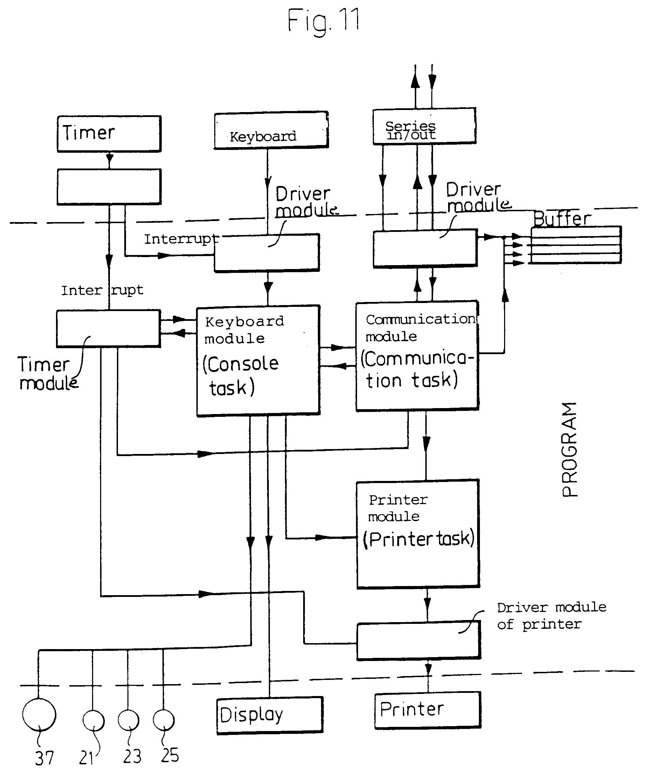

In Fig. 11 the construction of the programs in a station unit is schematically shown. The single chip processor 27 is supposed to have at least one programmable clock or timer, as is the case with the preferred M50747 having three built-in timers. This timer delivers interrupt signals to a driver module for input from and decoding the keyboard of the station unit. The timer also delivers interrupt signals to a timer module, that on suitable times transfers the program control to a keyboard module, a communication module or a printer module. The keyboard module processes information from the keyboard and transfers, when suitable, appropriate signals and message information to the communication module and the printer module. In many cases information also should be shown on the display and for this the keyboard module also has communications with the display and also sends signals to the timer module for initiating later interrupts for, for instance, change of the display. The keyboard module also controls the three signal lamps 21, 23, and 25 and the buzzer 37. The communication module takes care of the necessary logic for input and output on the communication line, interrupt for that being generated by the in-and out-ports. The communication module naturally receives from and also sends information communication module naturally receives from and also sends information naturally receives from and also sends information to the keyboard module. When a message comes to the station unit it is taken care of by a particular driver module for the communication, storing the decoded information in a buffer region from which the information is recalled by the communication module. The printer module can be initiated by the timer module, the keyboard module or the communication module and after this a special program segment is introduced, the driver module of the printer, providing the necessary primitive signal processing for the operation of the printer.

As an example it will be described what happens when the key 89 "ACCEPTS CALLS" is depressed on the station unit. Since the keyboard is scanned periodically by the driver module of the keyboard module (for instance each 10th millisecond), it is discovered that a function key has been depressed, and thus the program control is being transferred to the keyboard control. This looks up in a list the address of the subroutine to be executed for the key 89 and transfers the program control to this. The subroutine will write "Accepts calls" on the display, send a code to the central unit indicating that this key has been depressed and will illuminate the green light emitting diode 21 and will then stop possibly occurring blinking of the light emitting diodes 21 and 21 and possibly disactivate the loudspeaker. Finally it initiates a timer module so that after a suitable time, for instance 15 seconds, the message mentioned above is removed from the display and instead the present time will be shown. Then the program control will proceed to wait for the next interrupt.

When the central unit receives the code that this key 89 has been depressed, via the communication module, the logging module executes a change of state for the person in the table for each person being stored on the hard disk and will then command the keyboard module to change the sign 201 of said person. The keyboard module executes this whereby the sign field 201 will show "Accepts calls". Further the logging module has set a flag being tested periodically. This indicates that the sign will be changed after a certain time. When the time has lapsed, the keyboard module will change the sign to "Present".

## Claims

1. An internal communication system comprising a number of station units (1), a central unit (CE1, CE2, 5) and connecting lines, the system being adapted for sending personal messages from one station unit (1) to another station unit (1) and to the central unit (CE1, CE2, 5) and from the central unit (CE1, CE2, 5) to the station units (1),
each station unit (1) being conventionally intended to be used with a telephone set and for presence check of a person with whom said station unit is associated,
which station units (1) have keyboards (15), and
the central unit (CE1, CE2, 5) comprising means for monitoring and administering the traffic between the station units (1) as well as for transferring traffic coming from the outside to and traffic passing from each station unit (1),
**characterized in**
that said keyboards (15) of the station units (1) have keys for figures, letters and special functions,
that each station unit (1) is provided with
- a printer (19) and a display (17) and
- a processor (27) for the control of said display (17), said printer (19) and the communication, and
- a storage unit (29, 31, 39) comprised in each station unit (1) and intended for storing messages to and from said station unit (1), and
that the printer (19) of a station unit (1) is arranged for printing messages from the central unit (CE1, CE2, 5) and from other station units (1) in order to have these messages written on paper and not being easily eraseable.

2. A system according to claim 1,
**characterized in**
that the station units (1) are arranged in such a way that in association with a printout on the printer (1) of a station unit (1), an optical signal is provided.

3. A system according to claim 2,
**characterized in**
that said optical signal is provided by a signal lamp or a light diode (25) arranged on the station unit (1).

4. A system according to claim 1,
**characterized in**
that the station units (1) are arranged in such a way that in association with a printout on the printer (19) of a station unit (1), a sound generator, buzzer or speaker (37) provided in the station unit (1) will output a sound signal.

5. A system according to one of claims 2 - 4,
**characterized in**
that the station units (1) are arranged in such a way that said signal provided by a station unit (1) is arranged to continue until depression of a key (106) on the station unit (1).

6. A system according to claim 1,
**characterized in**
that the display (17) is arranged to normally show the state of the station unit (1), in which the display (17) is arranged, that is if the person with whom said station unit (1) is associated, "is absent" or "is present".

7. A system according to claim 6,
**characterized in**
that the station units (1) are arranged in such a way that the state "is absent" is indicated by an optical signal.

8. A system according to claim 7,
**characterized in**
that the station units (1) are arranged in such a way that said optical signal is provided by blinking signal lamps or light diodes (21, 23).

9. A system according to claim 6,
**characterized in**
that the station units (1) are arranged in such a way that the state "is absent" is indicated by an acoustic signal.

10. A system according to claim 6,
**characterized in**
that the station units (1) are arranged in such a way that the state "is present" for a station unit (1) is divided into two partial states, a first partial state "is present and accepts telephone calls" and a second partial state "is present but does not accept telephone calls".

11. A system according to claim 10,
**characterized in**
that two optical signal elements (21, 23) are arranged on each station unit (1), of which elements one (21) is activated for said first partial state and the other element (23) for the second partial state.

12. A system according to claim 6,
**characterized in**
that the station units (1) are arranged in such a way that in said first partial state of a station unit (1) it is signalled to the central unit (CE1, CE2, 5) that possible messages to the person with whom the station unit (1) is associated, will be printed by the printer (19) of said station unit (1) and not be delivered verbally via telephone.

13. A system according to claim 1,
**characterized in**
that on said keyboard (15) of a station unit (1) two keys (89, 91) are arranged, so that on depression of either one of these it is signalled in said system that the person with whom said station unit (1) is associated is present.

14. A system according to claim 13,
**characterized in**
that the station units (1) are arranged in such a way that a first one of said keys (89) corresponds to a first partial state "is present and accepts telephone calls" and the second key (91) corresponds to a second partial state "is present but does not accept telephone calls".

15. A system according to claim 1,
**characterized in**
that the station units (1) are arranged in such a way that the display (17) besides showing the state of the person's own station unit (1) only on a special command can show the state of another station unit (1) and that it also shows the result of key depressions on the person's own station unit (1) and possibly the present time while anything else could not be shown on said display (17).

16. A system according to claim 1,
**characterized in**
that the station units (1) are arranged in such a way that the messages entering a station unit (1) can only be written by the printer (19) of the station unit (1) and that they cannot be shown on the display (17) of the station unit (1).

## Patentansprüche

1. Internes Kommunikationssystem mit einer Anzahl von Stationseinheiten (1), einer Zentraleinheit (CE1,CE2,5) und Verbindungsleitungen, wobei das System in der Lage ist zum Senden persönlicher Mitteilungen von einer Stationseinheit (1) zu einer anderen Stationseinheit (1) und zu der Zentraleinheit (CE1,CE2,5) und von der Zentraleinheit (CE1,CE2,5) zu den Stationseinheiten (1),
wobei jede Stationseinheit (1) in herkömmlicher Weise zur Benutzung mit einem Telefonapparat und zur Anwesenheitsprüfung einer Person, der die Stationseinheit zugeteilt ist, vorgesehen ist,
die Stationseinheiten (1) Tastaturen (15) aufweisen, und
die Zentraleinheit (CE1,CE2,5) eine Einrichtung zum Überwachen und Organisieren des Verkehrs zwischen den Stationseinheiten (1) sowie zum Übertragen des jeder Stationseinheit (1) von außen zugehenden Verkehrs und des von jeder Stationseinheit (1) ausgehenden Verkehrs aufweist,
**dadurch gekennzeichnet,**
daß die Tastaturen (15) der Stationseinheiten (1) Tasten für Zahlen, Buchstaben und spezielle Funktionen aufweisen,
daß jede Stationseinheit (1) versehen ist mit
- einem Drucker (19) und einer Anzeigeeinrichtung (17) und
- einem Prozessor (27) zur Steuerung der Anzeigeeinrichtung (17), des Druckers (19) und der Kommunikation, und
- einer Speichereinheit (29,31,39), die in jeder Stationseinheit (1) enthalten und zum Speichern von der Stationseinheit (1) zugeführten sowie von dieser ausgehenden Mitteilungen vorgesehen ist, und
daß der Drucker (19) einer Stationseinheit (1) Mitteilungen von der Zentraleinheit (CE1,CE2, 5) und von anderen Stationseinheiten (1) derart drucken kann, daß diese Mitteilungen auf Papier geschrieben werden und nicht leicht löschbar sind.

2. System nach Anspruch 1, dadurch gekennzeichnet, daß die Stationseinheiten (1) derart ausgebildet sind, daß im Zusammenhang mit einem Ausdruck des Druckers (19) einer Stationseinheit (1) ein optisches Signal erzeugt wird.

3. System nach Anspruch 2, dadurch gekennzeichnet, daß das optische Signal durch eine an der Stationseinheit (1) angeordnete Signalleuchte oder Leuchtdiode (25) erzeugt wird.

4. System nach Anspruch 1, dadurch gekennzeichnet, daß die Stationseinheiten (1) derart ausgebildet sind, daß im Zusammenhang mit einem Ausdruck des Druckers (19) einer Stationseinheit (1) ein an der Stationseinheit (1) angeordneter Tongenerator, Summer oder Lautsprecher (37) ein Tonsignal erzeugt.

5. System nach einem der Ansprüche 2 - 4, dadurch gekennzeichnet, daß die Stationseinheiten (1) derart ausgebildet sind, daß das von einer Stationseinheit (1) erzeugte Signal andauert, bis eine Taste (106) an der Stationseinheit (1) gedrückt wird.

6. System nach Anspruch 1, dadurch gekennzeichnet, daß die Anzeigeeinrichtung (17) normalerweise den Zustand der Stationseinheit (1) anzeigt, an der die Anzeigeeinrichtung (17) angeordnet ist, d.h. ob die Person, der die Stationseinheit (1) zugeteilt ist, "abwesend" oder "anwesend" ist.

7. System nach Anspruch 6, dadurch gekennzeichnet, daß die Stationseinheiten (1) derart ausgebildet sind, daß der Zustand "ist abwesend" durch ein optisches Signal angezeigt wird.

8. System nach Anspruch 7, dadurch gekennzeichnet, daß die Stationseinheiten (1) derart ausgebildet sind, daß das optische Signal durch das Aufleuchten von Signalleuchten oder Leuchtdioden (21,23) erzeugt wird.

9. System nach Anspruch 6, dadurch gekennzeichnet, daß die Stationseinheiten (1) derart ausgebildet sind, daß der Zustand "ist abwesend" durch ein akustisches Signal angezeigt wird.

10. System nach Anspruch 6, dadurch gekennzeichnet, daß die Stationseinheiten (1) derart ausgebildet sind, daß der Zustand "ist anwesend" einer Stationseinheit (1) in zwei Teil-Zustände unterteilt wird, und zwar einen ersten Teil-Zustand "ist anwesend und nimmt Telefonanrufe an" und einen zweiten Teil-Zustand "ist anwesend, nimmt jedoch keine Telefonanrufe an".

11. System nach Anspruch 10, dadurch gekennzeichnet, daß an jeder Stationseinheit (1) zwei optische Signalelemente (21,23) angeordnet sind, von denen ein Element (21) für den ersten Teil-Zustand und das andere Element (23) für den zweiten Teil-Zustand aktiviert wird.

12. System nach Anspruch 6, dadurch gekennzeichnet, daß die Stationseinheiten (1) derart ausgebildet sind, daß im ersten Teil-Zustand einer Stationseinheit (1) der Zentraleinheit (CE1,CE2,5) signalisiert wird, daß eventuelle Mitteilungen an die Person, der die Stationseinheit (1) zugeteilt ist, von dem Drucker (19) der Stationseinheit (1) gedruckt und nicht mündlich über das Telefon übermittelt werden.

13. System nach Anspruch 1, dadurch gekennzeichnet, daß an der Tastatur (15) einer Stationseinheit (1) zwei Tasten (89,91) derart vorgesehen sind, daß bei Betätigung einer dieser Tasten in dem System signalisiert wird, daß die Person, der die Stationseinheit (1) zugeteilt ist, anwesend ist.

14. System nach Anspruch 13, dadurch gekennzeichnet, daß die Stationseinheiten (1) derart ausgebildet sind, daß eine erste der Tasten (89) einem ersten Teil-Zustand "ist anwesend und nimmt Telefonanrufe an" und die zweite Taste (91) einem zweiten Teil-Zustand "ist anwesend, nimmt jedoch keine Telefonanrufe an" entspricht.

15. System nach Anspruch 1, dadurch gekennzeichnet, daß die Stationseinheiten (1) derart ausgebildet sind, daß die Anzeigeeinrichtung (17) außer dem Zustand der eigenen Stationseinheit (1) der-Person nur auf eine spezielle Instruktion hin den Zustand einer anderen Stationseinheit (1) zeigen kann, und daß die Anzeigeeinrichtung (17) ferner das Ergebnis von Tastenbetätigungen der eigenen Stationseinheit (1) der Person und wahlweise die aktuelle Zeit zeigt, während nichts anderes auf der Anzeigeeinrichtung (17) gezeigt werden kann.

16. System nach Anspruch 1, dadurch gekennzeichnet, daß die Stationseinheiten (1) derart ausgebildet sind, daß die einer Stationseinheit (1) zugehenden Mitteilungen nur von dem Drucker (19) der Stationseinheit (1) geschrieben werden können und daß sie nicht auf der Anzeigeeinrichtung (17) der Stationseinheit (1) gezeigt werden können.

## Revendications

1. Système de Communication interne comportant un certain nombre d'unités formant stations (1), une unité centrale (CE 1, CE 2, 5) et des lignes de connexion, le système étant conçu pour envoyer des messages personnels d'une unité formant station (1) à une autre unité formant station (1) et vers l'unité centrale (CE 1, CE 2, 5) et à partir de l'unité centrale (CE 1, CE 2, 5) aux unités formant stations (1), chaque unité formant station (1) étant destinée du façon classique à être utilisée avec un poste téléphonique et pour vérifier la présence d'une personne à laquelle ladite unité formant station est associée, lesquelles unités formant stations (1) comportant des claviers (15) et l'unité centrale (CE 1, CE 2, 5) comportant des moyens pour assurer la surveillance et l'administration du trafic entre les unités formant stations (1) de même qui pour transférer du trafic provenant de l'extérieur vers et du trafic passant en provenance de chaque unité formant station (1), caractérisé en ce que lesdits claviers (15) des unités formant stations (1) comportent des touches pour des chiffres, des lettres, et des fonctions spéciales, en ce que chaque unité formant station (1) comporte :
- une imprimante (19) et un dispositif de visualisation ou écran (17) et
- un processeur (27) pour la commande dudit écran (17), de ladite imprimante et la communication, et
- une unité d'emmagasinage (29, 31, 39) prévue dans chaque unité formant station (1) et destinée à l'emmagasinage de messages vers et de ladite unité formant station (1), et en ce que l'imprimante (19) d'une unité formant station (1) est conçue pour imprimer des messages provenant de l'unité centrale (CE 1, CE 2, 5) et d'autres unités formant stations (1) de sorte que ces messages soient écrits sur papier et ne soient pas facilement effaçables.

2. Système selon la revendication 1,
caractérisé en ce que les unités formant stations (1) sont cunçues de telle sorte qu'un signal optique est prévu en association avec une impression réalisée sur l'imprimante (1) d'une unité formant station (1).

3. Système selon la revendication 2,
caractérisé en ce que ledit signal optique est fourni par une lampe de signalisation ou uns diode lumineuse (25) disposée sur l'unité formant station (1).

4. Système salon la revendication 1,
caractérisé en ce que les unités formant stations (1) sont disposées de telle sorte qu'en association avec une impression de l'imprimante (19) d'une unité formant station (1), un générateur de son, un vibreur sonore ou un haut parleur (37) prévus dans l'unité formant station (1) va fournir un signal sonore.

5. Système selon l'une des revendications 2 à 4, caractérisé en ce que les unités formant stations (1) sont disposées d'une telle façon que ledit signal fourni par une unité formant station (1) est conçu pour sa prolonger jusqu'à ce que soit enfonçé une touche (106) de l'unité formant station (1).

6. Système selon la revendication 1,
caractérisé en ce que l'écran (17) est conçu pour montrer normalement l'état de l'unité formant station (1) dans lequel l'écran (17) est disposé ce qui signifie que si la personne avec laquelle ladite unité formant station (1) est associée, "est absente" ou "est présenté".

7. Système selon la revendication 6,
caractérisé en ce que les unités formant stations (1) sont disposées de telle sorte que l'état "est absente" est indiqué par un signal optique.

8. Système selon la revendication 7,
caractérisé en ce que les unités formant stations (1) sont disposées de telle façon que ledit signal optique est fourni par des lampes de signalisation ou des diodes lumineuses clignotantes (21, 23).

9. Système selon la revendication 6,
caractérisé en ce que les unités formant stations (1) sont disposées de telle sorte que l'état "est absente" est indiqué par un signal sonore.

10. Système selon la revendication 6,
caractérisé en ce que les unités formant stations (1) sont disposées de telle sorte que l'état "est présenté" pour une unité formant station (1) est divisé en deux états partiels, un premier état partiel "est présente et accepte des appels téléphoniques" et un deuxième état partiel "est présente mais n'accepte pas les appels téléphoniques".

11. Système selon la revendication 10,
caractérisé en ce que deux éléments de signalisation optique (21 , 23) sont prévus sur chaque unité formant station (1) parmi lesquels éléments l'un (21) est activé pour ledit premier état partiel et l'autre élément (23) pour le second état partiel.

12. Système selon la revendication 6,
caractérisé en ce que les unités formant stations (1) sont disposées de telle sorte que dans ledit premier état partiel d'une unité formant station (1) il est signalé à l'unité centrale (CE 1, CE 2, 5) que des messages possibles vers la personne à laquelle est associée l'unité formant station (1) vont être imprimés par l'imprimante (19) de ladite unité formant station (1) et ne seront pas transmis oralement par téléphone.

13. Système selon la revendication 1,
caractérisé en ce que sur ledit clavier (15) d'une unité formant station (1) sont prévues deux touches (89, 91) de telle sorte que lors de l'enfoncement de l'une quelconque de celles-ci, il est signalé audit systéme que la personne à laquelle ladite unité formant station (1) est associée est présente.

14. Système selon la revendication 13,
caractérisé en ce que les unités formant stations (1) sont disposées de telle sorte qu'une première desdites touches (89) correspond à un premier état partiel "est présente et accepte les communications téléphoniques" et la seconde touche (91) correspond à un second état partiel "est présente mais n'accepte pas les communications téléphoniques".

15. Système salon la revendication 1,
caractérisé en ce que les unités formant stations (1) sont disposées de telle sorte que l'écran (17) en plus de montrer l'état de l'unité formant station propre à une personne (1)seulement sur une commande spéciale peut montrer l'état d'une autre unité formant station (1) et en Ce qu'il montre également le résultat des enfoncements de touches sur une unité formant station propre à la personne (1) et éventuellement l'heure actuelle alors qu'aucune autre chose ne pourrait être montrée sur ledit écran (17).

16. Système selon la revendication 1,
caractérisé en ce que les unités formant stations (1) sont disposées d'une façon telle que les messages qui entrent dans une unité formant station (1) peuvent seulement être écrits par l'imprimante (19) de l'unité formant station (1) et en ce qu'ils ne peuvent pas être montrés sur l'écran (17) de l'unité formant station (1).
